# EUROPÄISCHE PATENTANMELDUNG

(11) **EP 4 821 652 A1**
(43) Veröffentlichungstag der Anmeldung: **14.10.2026**
(21) Anmeldenummer: 25169143.2
(22) Anmeldetag: 08.04.2025
(51) Int. Cl.: B29C 37/00, B29C 45/14

(54) **VERFAHREN ZUR HERSTELLUNG EINES ZIERTEILS SOWIE ZIERTEIL**

(71) Anmelder: HIB Trim Part Solutions GmbH, 76646 Bruchsal (DE)
(72) Erfinder: SÜSS, Thorsten, 76189 Karlsruhe (DE)
(74) Vertreter: Staeger & Sperling Partnerschaftsgesellschaft mbB

(57) **Zusammenfassung**

Die Erfindung betrifft ein Verfahren zur Herstellung eines Zierteils (10) mit einem sichtseitigen Verbundelement (12) und einem dazu rückseitigen Trägerkörper (16) sowie mit einer zwischen dem Verbundelement (12) und dem Trägerkörper (16) angeordneten Koppelschicht (15), welche ausgebildet ist, das Verbundelement (12) mit dem Trägerkörper (16) zu verbinden, wobei verfahrensgemäß ein Aushärten eines mit einer Matrix imprägnierten Verbundwerkstoffes zu dem Verbundelement (12) und ein Aufbringen einer Klebeschicht (14) und Anordnen der Koppelschicht (15) an einer Rückseite (R) des Verbundelements (12) sowie ein Bilden des Trägerkörpers (16) durch Anspritzen eines Kunststoffs an die Koppelschicht (15) erfolgt, sodass sich der Kunststoff stoffschlüssig und/oder formschlüssig mit der Koppelschicht (15) verbindet und über die Koppelschicht mit dem Verbundelement (12) verbunden wird.

## Beschreibung

Die Erfindung betrifft ein Verfahren zur Herstellung eines Zierteils sowie ein vorzugsweise mit diesem Verfahren hergestelltes Zierteil für ein Fahrzeug.

Aus dem Stand der Technik sind verschiedenste Verbundbauteile und insbesondere auch Faserverbundbauteile bekannt, welche aus einer Matrix und einem in die Matrix eingebetteten Verstärkungsmaterial, beispielsweise in Form von Fasern oder Flocken, gebildet sind. Solche Verbundbauteile können durch eine spezifische Ausrichtung des Verstärkungsmaterials bei verhältnismäßig geringem Gewicht hohe Kräfte aufnehmen.

Aufgrund dieser Eigenschaften wird die optische Erscheinung solcher Verbundbauteile als hochwertig wahrgenommen, sodass Zierteile mit der optischen Erscheinung eines Verbundbauteils gewünscht sind. Solche Zierteile müssen jedoch keine wesentlichen Kräfte aufnehmen, da lediglich deren optische Erscheinung relevant ist.

Da Zierteile, welche den optischen Anschein eines Verbundbauteils durch eine oberflächige Folie bereitstellen, weniger wertig wirken und Zierteile, welche vollständig in der Verbundwerkstofftechnik hergestellt sind, teuer sind, sind im Stand der Technik mehrelementige Zierteile bekannt, bei welchen ein dünnes und damit kostengünstig herstellbares Verbundelement aus dem optisch gewünschten Verbundwerkstoff mit einem günstig herzustellenden Trägerkörper verbunden ist.

Hierzu werden das Verbundelement und der Kunststoffträger bisher meist getrennt voneinander hergestellt und erst anschließend beispielsweise durch Verkleben miteinander verbunden, was jedoch zu langen Prozesszeiten und Problemen mit der Maßhaltigkeit der Zierteile sowie insgesamt zu hohen Gesamtkosten führt.

Wird als Matrix für das Verbundelement Harz verwendet, kommt hinzu, dass ein unmittelbares Hinterspritzen des Verbundelements mit einem thermoplastischen Kunststoff zur Bildung eines Trägerkörpers meist nicht möglich ist, da herkömmliche Harze mit thermoplastischen Materialien unter normalen Umständen keine dauerhafte und belastbare Verbindung eingehen.

Der Erfindung liegt deshalb die Aufgabe zugrunde, die vorgenannten Nachteile zu überwinden und ein kostengünstiges Verfahren zur Herstellung solcher Zierteile sowie ein kostengünstig herstellbares Zierteil mit der Optik eines Verbundwerkstoffes bereitzustellen.

Diese Aufgabe wird durch die Merkmalskombination gemäß dem Hauptanspruch sowie gemäß dem nebengeordneten Anspruch gelöst.

Erfindungsgemäß wird daher ein Verfahren zur Herstellung eines vorzugsweise einteiligen und/oder einstückigen Zierteils vorgeschlagen. Ein solches Zierteil weist erfindungsgemäß ein sichtseitiges, d. h. einem Betrachter im bestimmungsgemäß eingebauten Zustand zugewandtes, Verbundelement und einen dazu rückseitigen, d. h. im bestimmungsgemäß eingebauten Zustand von dem Betrachter abgewandten, Trägerkörper zur Anbindung des Zierteils an beispielsweise ein Fahrzeug oder zur Anbindung an eine andere das Zierteil tragende Unterkonstruktion, welche wiederum im Fahrzeug bzw. Fahrzeuginnenraum angeordnet sein kann. Weiter ist als Bestandteil des Zierteils eine zwischen dem Verbundelement und dem Trägerkörper angeordnete flexible Koppelschicht vorgesehen, welche ausgebildet ist, das Verbundelement mit dem Trägerkörper zu verbinden.

Das erfindungsgemäß vorgeschlagene Verfahren umfasst dabei zumindest die folgenden Schritte:
a) Aushärten (beispielsweise im SMC- oder Autoklav-Prozess) eines mit einer Matrix imprägnierten Verbundwerkstoffes zu dem Verbundelement;
b) Aufbringen einer Klebeschicht und Anordnen der Koppelschicht rückseitig und insbesondere an einer Rückseite des Verbundelements nach Schritt a), sodass zwischen dem Verbundelement und der Koppelschicht vorzugsweise ausschließlich die Klebeschicht angeordnet ist, oder
   Aufbringen einer integral als Klebeschicht wirkenden Koppelschicht rückseitig und insbesondere an der Rückseite des Verbundwerkstoffs nach Schritt a), sodass zwischen dem Verbundelement und einer von dem Verbundelement abgewandten Seite der Koppelschicht ein als Klebeschicht wirkender Abschnitt der Koppelschicht angeordnet ist, oder
   Aufbringen der Klebeschicht und Anordnen der Koppelschicht rückseitig und insbesondere an der Rückseite des Verbundwerkstoffs vor Schritt a), wobei bei letztgenannter Variante vorzugsweise zuvor eine Sperrschicht an der Rückseite des Verbundwerkstoffes angeordnet wird, welche ausgebildet ist, ein Eindringen der Matrix in die Klebeschicht bzw. in die Koppelschicht zu verhindern, sodass zwischen dem Verbundwerkstoff und der Koppelschicht insbesondere ausschließlich die Klebeschicht bzw. insbesondere ausschließlich Sperrschicht und die Klebeschicht angeordnet ist, wobei die Sperrschicht und die Klebeschicht auch als Verbund an der Rückseite des Verbundwerkstoffs angeordnet werden können;
c) Bilden des Trägerkörpers durch Anspritzen eines Kunststoffs an die Koppelschicht, sodass sich der Kunststoff stoffschlüssig und/oder formschlüssig mit der Koppelschicht verbindet und über die Koppelschicht mit dem Verbundelement verbunden wird.

Der mit der Matrix imprägnierte Verbundwerkstoff liegt dabei vorzugsweise als Prepreg vor, wobei es sich bei dem Verbundwerkstoff beispielsweise um ein Gewebe, ein Gelege, ein Vlies oder beispielsweise in Gruppen angeordnete Kurzfasern aus insbesondere Carbonfasern, Glasfasern oder Aramidfasern bzw. allgemeiner aus synthetischen oder natürlichen Fasern, wie Flachs, handelt.

Weiter handelt es sich bei der Matrix vorzugsweise um ein Harz bzw. um ein Polymerharz. Als mögliche Materialien der Harz-Matrix sind dabei insbesondere Epoxidharze, Polyesterharze, Vinylesterharze, Phenolharze und Polyamidharze zu nennen. Alternativ kann es sich bei der Matrix aber auch um einen Thermoplast, insbesondere Polypropylen, handeln.

Weiter wird als Kunststoff für den Trägerkörper vorzugsweise ein thermoplastisches Material, wie ABS oder PC, verwendet, sodass die Koppelschicht als Verbindungselement zwischen dem Material des Trägerkörpers und dem Material des Verbundelements dient, welche ansonsten keine dauerhafte und belastbare Verbindung eingehen würden.

Da das Verbundelement des Zierteils die optische Erscheinung an der Sichtseite des Zierteils bestimmen soll, bildet das Verbundelement vorzugsweise die sichtseitige und sichtbare Oberfläche des Zierteils, wobei diese durch eine transparente und/oder transluzente Oberflächenbeschichtung überdeckt sein kann, welche als Schutzschicht dient.

Eine besonders vorteilhafte Variante des Verfahrens sieht vor, dass das Aushärten gemäß Schritt a) im Autoklav-Verfahren erfolgt, bei welchem Luft insbesondere zu der Rückseite evakuiert wird. Wie allgemein bekannt, erfolgt beim Autoklav-Verfahren die Aushärtung der Matrix unter kontrolliertem Druck und hoher Temperatur. Hierfür kann der mit der Matrix imprägnierte Verbundwerkstoff in eine Form eingelegt werden, wobei vorgesehen ist, dass Luft aus der Form evakuiert wird. Um an der Sichtseite bzw. sichtseitig des dadurch entstehenden Verbundelements eine möglichst ebene bzw. glatte Oberfläche bereitzustellen, ist vorgesehen, dass die Luft zu der Rückseite hin evakuiert wird, sodass das Verbundelement an der Sichtseite weniger Unebenheiten aufweist. Die dabei an der Rückseite entstehenden Unebenheiten werden durch die Koppelschicht und das Anspritzen bzw. das Hinterspritzen mit Kunststoff ausgeglichen. In diesem Zusammenhang ist darauf hinzuweisen, dass eine im Weiteren noch genannte Sperrschicht mit dem Aushärten im Autoklav-Verfahren bzw. dem Evakuieren zur Rückseite hin nachteilhaft sein kann, da die Sperrschicht vorzugsweise an der Rückseite angeordnet wird, sodass aufgrund der auch luftdichten Sperrschicht eine Evakuierung zur Rückseite hin nur aufwändig möglich ist. Wird stattdessen zu der Sichtseite hin evakuiert, können an dieser die nicht gewünschten Unebenheiten entstehen. Folglich ist bei der Verwendung des Autoklav-Verfahrens vorzugsweise keine solche Sperrschicht vorgesehen. Je nach den Gegebenheiten, kann jedoch eine Sperrschicht vorgesehen sein, welche beispielsweise bezüglich Position und Größe definierte fluiddurchlässige Abschnitte aufweisen kann, sodass eine gezielte Evakuierung durch die fluiddurchlässigen Abschnitte möglich ist.

Für die Klebeschicht gilt, dass diese an der Koppelschicht oder an der Rückseite des Verbundelements bzw. sofern vorhanden an der Sperrschicht angeordnet werden kann.

Weiter ist vorzugsweise vorgesehen, dass die Klebeschicht in Schritt b) in flüssiger und/oder sprühfähiger Form oder als Film auf das Verbundelement oder die Koppelschicht aufgebracht wird und die Koppelschicht mittels der Klebeschicht unmittelbar an dem Verbundelement fixiert wird und zwischen der Koppelschicht und dem Verbundelement ausschließlich die Klebeschicht angeordnet ist.

Wird in Schritt b) eine integral als Klebeschicht wirkende Koppelschicht an der Rückseite des Verbundwerkstoffs aufgebracht, ist besonders vorteilhaft, wenn die integral als Klebeschicht wirkende Koppelschicht zunächst, d. h. zumindest beim Aufbringen, in flüssiger und/oder sprühfähiger Form vorliegt, sodass diese durch Sprühen oder im Roll-Coating-Verfahren an der Rückseite des Verbundelements angeordnet bzw. aufgebracht werden kann.

Hieraus ergibt sich, dass das Verbundelement vorzugsweise zunächst ohne die Koppelschicht ausgehärtet bzw. hergestellt wird und anschließend die Koppelschicht an der Rückseite des Verbundelements fixiert wird, sodass anschließend das Hinterspritzen der Einheit aus Verbundelement und Koppelschicht erfolgen kann.

Alternativ kann das Aushärten gemäß Schritt a) statt im Autoklav-Verfahren auch in einem SMC-Verfahren erfolgen, wobei bei einem SMC(Sheet Moulding Compound)-Verfahren die Matrix und der Verbundwerkstoff aneinander anliegen und zur Herstellung des Verbundelements miteinander verpresst werden.

Wird ein SMC-Verfahren verwendet, kann die Klebeschicht in Schritt b) in flüssiger und/oder sprühfähiger Form oder als Film auf das Verbundelement oder die Koppelschicht aufgebracht oder - sofern keine Sperrschicht vorgesehen ist - integral durch die Matrix gebildet werden. Wird die Klebeschicht durch die Matrix gebildet, ist das Aufbringen der Klebeschicht mit dem Anordnen auf und/oder dem Einbringen in den Verbundwerkstoff integriert. Weiter wird die Koppelschicht mittels der Klebeschicht unmittelbar an dem Verbundelement fixiert, sodass zwischen der Koppelschicht und dem Verbundelement ausschließlich die Klebeschicht angeordnet ist. Analog zu dem Autoklav-Verfahren gilt bei dieser konkreten Verfahrensvariante, dass das Verbundelement vorzugsweise zunächst ohne die Koppelschicht ausgehärtet bzw. hergestellt wird und anschließend die Koppelschicht an der Rückseite des Verbundelements fixiert wird, sodass anschließend das Hinterspritzen der Einheit aus Verbundelement und Koppelschicht erfolgen kann.

Alternativ kann jedoch vorgesehen sein, dass vor dem Aushärten in Schritt a) eine Sperrschicht zwischen dem Verbundwerkstoff und der Koppelschicht angeordnet wird, welche ausgebildet ist, die Matrix von der Koppelschicht zu trennen und ein Eindringen der Matrix in die Koppelschicht während des Aushärtens zu verhindern.

Die Sperrschicht kann beispielsweise aus Vulkanfaser, dichtem Holzfurnier, Papier aus Cellulose oder synthetischen Fasern oder einer Kunststofffolie gebildet sein. Vorteilhaft für die Sperrschicht ist jedoch, wenn diese ausgebildet ist, das Eindringen der Matrix in die Koppelschicht bzw. auf eine von dem Verbundwerkstoff abgewandte Seite zu verhindern und sich unmittelbar oder mittelbar über die Klebeschicht mit dem Verbundelement und der Koppelschicht zu verbinden.

Das Aushärten des Verbundelements erfolgt vorzugsweise mit der daran angeordneten Sperrschicht und der über die Klebeschicht an der Sperrschicht angeordneten Koppelschicht. Hierzu kann zunächst ein Verbund aus Sperrschicht, Klebeschicht und Koppelschicht erzeugt und der Verbund dann an dem noch nicht ausgehärteten Verbundelement angeordnet werden.

Im Hinblick auf die Klebeschicht gilt jedoch weiterhin, dass diese vorzugsweise in Schritt b) in flüssiger und/oder sprühfähiger Form oder als Film auf die Sperrschicht oder die Koppelschicht aufgebracht wird, wobei die Koppelschicht mittels der Klebeschicht unmittelbar an der Sperrschicht fixiert wird und zwischen der Koppelschicht und dem Verbundelement ausschließlich die Sperrschicht und die Klebeschicht angeordnet sind.

Für alle Verfahrensvarianten gilt, dass die Koppelschicht vorzugsweise aus einem Vliesstoff, einem Schaumstoff, einer Kunststofffolie oder einem Holzfurnier gebildet ist, wobei diese vorzugsweise entsprechend des verwendeten Verfahrens hitzebeständig sind. Weiter sind die verschiedenen Materialien jeweils ausgebildet, eine dauerhafte stoffschlüssige und/oder formschlüssige Verbindung mit dem Kunststoff des Trägerkörpers bzw. mit dem Trägerkörper einzugehen. In Bezug auf eine Kunststofffolie kann daher beispielsweise eine Folie gewählt werden, welche sich stoffschlüssig mit dem Material des Trägerkörpers, beispielsweise ABS oder PC, verbinden kann. In Bezug auf Holzfurnier und dessen raue Oberfläche ist eine solche Verbindung beispielsweise formschlüssig herstellbar.

Obgleich als Koppelschicht vorzugsweise genau eine Schicht aus weiter vorzugsweise genau einem Material vorgesehen ist, kann die Koppelschicht auch als Lagenverbund und somit mehrschichtig vorliegen. Soll beispielsweise eine Koppelschicht aus Vliesstoff mit einer bestimmten Steifigkeit bereitgestellt werden, kann die Koppelschichten aus zwei miteinander verbundenem Schichten aus Vliesstoff gebildet sein. Ist ein mehrschichtiger Aufbau der Koppelschicht vorgesehen, können die einzelnen Schichten der Koppelschicht auch aus den verschiedenen für die Koppelschicht genannten Materialien gebildet sein. So kann die Koppelschicht beispielsweise aus einer Schicht Vulkanfasern und einer Schicht Vliesstoff gebildet werden.

Ebenso gilt für alle Verfahrensvarianten, dass der mit der Matrix imprägnierte Verbundwerkstoff vorzugsweise als einschichtiger oder mehrschichtiger Prepreg vorliegt.

Weiter kann vorgesehen sein, dass der mit der Matrix imprägnierte Verbundwerkstoff oder das Verbundelement von der Sichtseite zu der Rückseite hin eine Materialstärke zwischen 0,2 und 1,5 mm, insbesondere zwischen 0,4 und 1,3 mm, aufweist, da die mechanische Belastbarkeit nur eine untergeordnete Rolle spielt und die angegebene Dicke bzw. Materialstärke für die optische Erscheinung ausreichend ist.

Ein weiterer Aspekt der Erfindung betrifft ein Zierteil für ein Fahrzeug, welches vorzugsweise durch das erfindungsgemäß vorgeschlagene Verfahren hergestellt wird und weiter vorzugsweise einstückig oder zumindest einteilig ausgebildet ist und somit eine nicht zerstörungsfrei trennbare Einheit bildet. Das Zierteil weist ein sichtseitiges Verbundelement und einen dazu rückseitigen Trägerkörper zur Anbindung des Zierteils an das Fahrzeug sowie eine zwischen dem Verbundelement und dem Trägerkörper angeordnete flexible Koppelschicht auf. Die Koppelschicht ist aus einem Vliesstoff oder einem Schaumstoff oder einem zunächst, d. h. beim Aufbringen auf die Klebeschicht oder direkt auf das Verbundelement, flüssigen und/oder sprühfähigen Material gebildet sowie ausgebildet, das Verbundelement mit dem Trägerkörper zu verbinden. Die Koppelschicht ist mit dem Trägerkörper hinterspritzt und dadurch formschlüssig und/oder stoffschlüssig mit dem Trägerkörper verbunden. Zwischen der Koppelschicht und dem Verbundelement ist eine Klebeschicht angeordnet und die Koppelschicht über die Klebeschicht insbesondere unmittelbar mit dem Verbundelement verbunden, wobei die Koppelschicht auch integral die Klebeschicht bilden und somit die Anbindung an das Verbundbauteil bereitstellen kann.

Wie in Bezug auf das Verfahren erläutert, kann zwischen dem Verbundelement und der Koppelschicht bzw. zwischen dem Verbundelement und der Klebeschicht eine Sperrschicht angeordnet sein.

Sowohl für das erläuterte Verfahren als auch für das Zierteil an sich gilt, dass an einer Rückseite des Trägerkörpers, d. h. einer von dem Verbundelement abgewandten Seite des Trägerkörpers, durch den Trägerkörper Anbindungselemente gebildet sein können, mit welchen das Zierteil an dem Fahrzeug fixierbar ist. Beispielhaft sind als Anbindungselemente Klebeflächen, Laschen, Stege, Rastelemente oder Gewinde zu nennen.

Ferner gilt sowohl für das Verfahren als auch für das Zierteil, dass sichtseitig des Verbundelements eine vorzugsweise transparente oder zumindest transluzente Oberflächenbeschichtung ausgebildet werden kann. Die Oberflächenbeschichtung kann beispielsweise als mehrschichtiger Lackaufbau erfolgen und dazu dienen, Anforderungen hinsichtlich der Oberflächenqualität sowie ästhetischer und technischer Natur zu erfüllen.

An der Rückseite des Verbundelements vorhandene und durch das Herstellungs- bzw. Aushärteverfahren bedingte Unebenheiten werden zu der Rückseite des Zierteils hin durch den angespritzten Trägerkörper ausgeglichen, sodass sich also die Koppelschicht und der Trägerkörper vorzugsweise in durch die Unebenheiten gebildete Ausnehmungen an der Rückseite des Verbundelements hinein erstrecken.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein gemäß einer ersten Verfahrensvariante hergestelltes Zierteil;
- Fig. 2: ein gemäß einer zweiten Verfahrensvariante hergestelltes Zierteil;
- Fig. 3: ein gemäß einer dritten Verfahrensvariante hergestelltes Zierteil.

Die Figuren sind beispielhaft schematisch. Gleiche Bezugszeichen in den Figuren weisen auf gleiche funktionale und/oder strukturelle Merkmale hin.

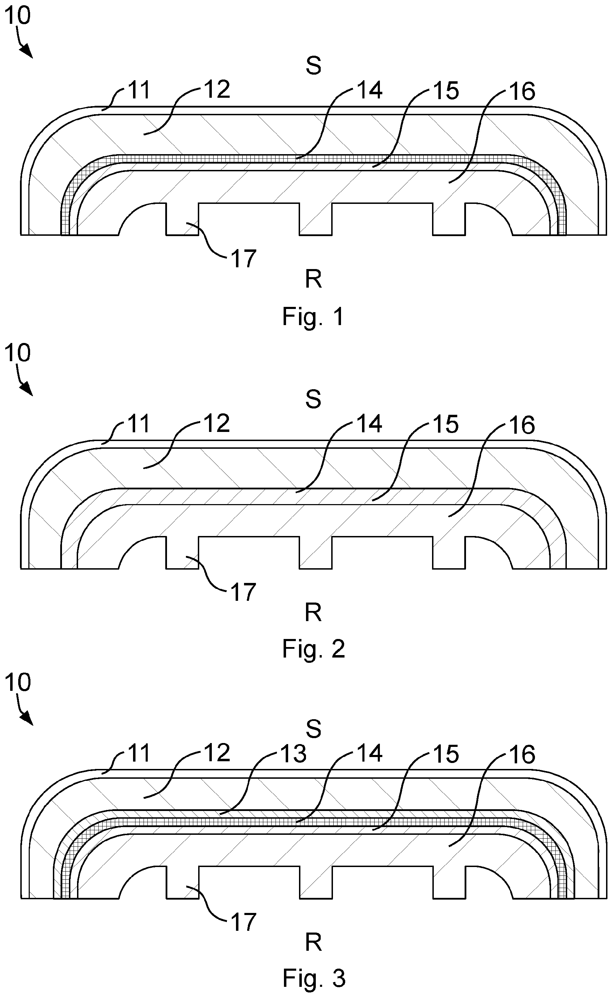

In Figur 1 ist ein gemäß einer ersten Verfahrensvariante hergestelltes Zierteil 10 dargestellt, welche detaillierter beschrieben werden soll. Klarstellend wird darauf hingewiesen, dass auch andere erfindungsgemäße Verfahrensvarianten zu einem Zierteil 10 führen können, wie es in Figur 1 dargestellt ist.

Gemäß der genannten ersten Verfahrensvariante ist vorgesehen, einen mit einer Matrix aus Harz imprägnierten Verbundwerkstoff im Autoklav-Verfahren zu einem Verbundelement 12 auszuhärten.

Hierbei wird der imprägnierte Verbundwerkstoff in einer Form angeordnet, welche zu der Rückseite R hin evakuiert wird, sodass an der Sichtseite S des durch das Aushärten gebildeten Verbundelements 12 eine hohe Oberflächengüte erreicht wird, sich an der Rückseite R jedoch Poren und Lunker bzw. allgemein Ausnehmungen bilden.

Anschließend wird an der Rückseite R des Verbundelements 12 eine Koppelschicht 15 aus einem Vliesstoff durch eine Klebeschicht 14 fixiert, sodass zwischen der Koppelschicht 15 und dem Verbundelement 12 ausschließlich die Klebeschicht 14 angeordnet ist. Die Klebeschicht 14 kann in flüssiger Form beispielsweise aufgesprüht oder aufgestrichen werden. Ebenso ist möglich, dass die Klebeschicht 14 in Form eines Films oder einer Folie zwischen dem Verbundelement 12 und der Koppelschicht 15 angeordnet wird.

Wesentlich ist nun, dass anschließend der Trägerkörper 16 durch Anspritzen eines hier thermoplastischen Kunststoffs an die Koppelschicht 15 bzw. Hinterspritzen der Koppelschicht 15 mit einem thermoplastischen Material erfolgt, sodass der Trägerkörper 16 nicht separat hergestellt wird, sondern sich stoff- und/oder formschlüssig mit der Koppelschicht 15 und über die Koppelschicht 15 und die Klebeschicht 14 mit dem Verbundelement 12 verbindet, wobei mittels der Koppelschicht 15 und der Klebeschicht 14 eine dauerhafte und belastbare Verbindung zwischen dem als Matrix dienenden Harz und dem aus thermoplastischen Material gebildeten Trägerkörper 16 hergestellt ist.

Zur Anbindung des so hergestellten Zierteils 10 an beispielsweise ein Fahrzeug kann der Trägerkörper Anbindungselemente 17 ausbilden, welche hier beispielhaft als Stege ausgeführt sind, welche in korrespondierende Aufnahmen am Fahrzeug eingesteckt werden können.

Ferner kann nach dem Hinterspritzen bzw. dem Ausbilden des Trägerkörpers 16 die sichtseitige Oberfläche des Verbundelements 12 veredelt und hier beispielhaft mit einer transparenten Oberflächenbeschichtung 11 versehen werden.

Figur 2 zeigt ein gemäß einer zweiten Verfahrensvariante hergestelltes Zierteil 10, welches im Wesentlichen dem Zierteil 10 gemäß Figur 1 entspricht. Abweichend von dem zu Figur 1 erläuterten Verfahren ist jedoch vorgesehen, dass keine separate Klebeschicht 14 aufgebracht wird, sondern eine beim Aufbringen zunächst flüssige Koppelschicht 15 im SprühVerfahren bzw. durch Sprühen aufgebracht wird, welche nach ihrem austrocknen bzw. aushärten integral als Klebeschicht 14 wirkt bzw. eine solche bildet. Die zugleich als Klebeschicht 14 und Koppelschicht 15 dienende Schicht wird entsprechend nach dem Aushärten des Verbundelements 12 auf dessen Rückseite aufgebracht und dadurch mit diesem verklebt. Anschließend und vorzugsweise nach dem Trocknen der integral als Klebeschicht 14 dienenden Koppelschicht 15 wird dann der Trägerkörper 16 an die Koppelschicht 15 angespritzt, sodass der Kunststoff stoffschlüssig und ggfs. formschlüssig mit der Koppelschicht 15 verbunden und über den als Klebeschicht 14 wirkenden Abschnitt der Koppelschicht 15 mit dem Verbundelement 12 verklebt ist.

In Figur 3 ist ein gemäß einer zweiten Verfahrensvariante hergestelltes Zierteil 10 dargestellt, welche detaillierter beschrieben werden soll. Bezüglich ihres Aufbaus unterscheidet sich das in Figur 3 abgebildete Zierteil 10 lediglich durch eine zwischen dem Verbundelement 12 und der Klebeschicht 14 angeordnete Sperrschicht 13, welche aus Vulkanfaser oder einem anderen dichten Material gebildet ist und bezüglich der für das Verbundelement 12 verwendeten Matrix dicht ist.

Zur Herstellung des in Figur 3 hergestellten Zierteils 10 ist vorgesehen, den mit einer Harz-Matrix imprägnierten Verbundwerkstoff in einem SMC-Verfahren zu dem Verbundelement 12 auszuhärten, wobei hierbei zuvor die Sperrschicht 13 sowie rückseitig der Sperrschicht 13 auch bereits die Klebeschicht 14 und die Koppelschicht 15 an dem Verbundwerkstoff angeordnet wird.

Nach dem Aushärten im SMC-Verfahren, bei welchem die Sperrschicht 13 das Eindringen des Harzes in die Koppelschicht 15 verhindert, erfolgt wiederum ein Anspritzen eines thermoplastischen Kunststoffs an die Koppelschicht 15 bzw. ein Hinterspritzen der Koppelschicht 15 mit einem thermoplastischen Material, um dadurch den Trägerkörper 16 zu bilden und stoff- und/oder formschlüssig mit der Koppelschicht 15 und über die Koppelschicht 15 und die Klebeschicht 14 mit dem Verbundelement 12 zu verbinden, wobei mittels der Koppelschicht 15 und der Klebeschicht 14 eine dauerhafte und belastbare Verbindung zwischen dem als Matrix dienenden Harz und dem aus thermoplastischen Material gebildeten Trägerkörper 16 hergestellt ist.

Wie auch in Bezug zu Figur 1 erläutert, kann der Trägerkörper 16 mit Anbindungselementen 17 hergestellt und die sichtseitige Oberfläche des Verbundelements 12 mit einem mehrschichtigen Lackaufbau als eine transparente Oberflächenbeschichtung 11 versehen werden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Verfahren zur Herstellung eines Zierteils (10) mit einem sichtseitigen Verbundelement (12) und einem dazu rückseitigen Trägerkörper (16) zur Anbindung des Zierteils (10) sowie mit einer zwischen dem Verbundelement (12) und dem Trägerkörper (16) angeordneten flexiblen Koppelschicht (15), welche ausgebildet ist, das Verbundelement (12) mit dem Trägerkörper (16) zu verbinden, umfassend zumindest die folgenden Schritte:
a) Aushärten eines mit einer Matrix imprägnierten Verbundwerkstoffes zu dem Verbundelement (12);
b) Aufbringen einer Klebeschicht (14) und Anordnen der Koppelschicht (15) rückseitig und insbesondere an einer Rückseite (R) des Verbundelements (12) nach Schritt a), sodass zwischen dem Verbundelement (12) und der Koppelschicht (15) die Klebeschicht (14) angeordnet ist, oder
Aufbringen einer integral als Klebeschicht (14) wirkenden Koppelschicht (15) rückseitig und insbesondere an einer Rückseite (R) des Verbundwerkstoffs nach Schritt a), sodass zwischen dem Verbundelement (12) und einer von dem Verbundelement (12) abgewandten Seite der Koppelschicht (15) ein als Klebeschicht (14) wirkender Abschnitt der Koppelschicht (15) angeordnet ist, oder
Aufbringen der Klebeschicht (14) und Anordnen der Koppelschicht (15) rückseitig und insbesondere an einer Rückseite (R) des Verbundwerkstoffs vor Schritt a), sodass zwischen dem Verbundwerkstoff und der Koppelschicht (15) die Klebeschicht (14) angeordnet ist;
c) Bilden des Trägerkörpers (16) durch Anspritzen eines Kunststoffs an die Koppelschicht (15), sodass sich der Kunststoff stoffschlüssig und/oder formschlüssig mit der Koppelschicht (15) verbindet und über die Koppelschicht mit dem Verbundelement (12) verbunden wird.

2. Verfahren nach Anspruch 1,
wobei das Aushärten gemäß Schritt a) im Autoklav-Verfahren erfolgt, bei welchem Luft insbesondere zu der Rückseite (R) evakuiert wird.

3. Verfahren nach Anspruch 1,
wobei das Aushärten gemäß Schritt a) in einem SMC-Verfahren erfolgt.

4. Verfahren nach einem der vorhergehenden Ansprüche,
wobei die Klebeschicht (14) in Schritt b) in flüssiger und/oder sprühfähiger Form oder als Film auf das Verbundelement (12) oder die Koppelschicht (15) aufgebracht wird und
wobei die Koppelschicht (15) mittels der Klebeschicht (14) unmittelbar an dem Verbundelement (12) fixiert wird und zwischen der Koppelschicht (15) und dem Verbundelement (12) ausschließlich die Klebeschicht (14) angeordnet ist.

5. Verfahren nach einem der vorhergehenden Ansprüche,
wobei vor dem Aushärten in Schritt a) eine Sperrschicht (13) zwischen dem Verbundwerkstoff und der Koppelschicht (15) angeordnet wird, welche ausgebildet ist, die Matrix von der Koppelschicht (15) zu trennen und ein Eindringen der Matrix in die Koppelschicht (15) während des Aushärtens zu verhindern.

6. Verfahren nach Anspruch5,
wobei die Klebeschicht (14) in Schritt b) in flüssiger und/oder sprühfähiger Form oder als Film auf die Sperrschicht (13) oder die Koppelschicht (15) aufgebracht wird und
wobei die Koppelschicht (15) mittels der Klebeschicht (14) unmittelbar an der Sperrschicht (13) fixiert wird und zwischen der Koppelschicht (15) und dem Verbundelement (12) ausschließlich die Sperrschicht (13) und die Klebeschicht (14) angeordnet sind.

7. Verfahren nach einem der vorhergehenden Ansprüche,
wobei die an der Klebeschicht (14) angeordnete Koppelschicht (15) aus einem Vliesstoff, einem Schaumstoff, einer Kunststofffolie oder einem Holzfurnier gebildet ist, welche jeweils ausgebildet sind, eine dauerhafte stoffschlüssige und/oder formschlüssige Verbindung mit dem Kunststoff des Trägerkörpers (16) einzugehen.

8. Verfahren nach einem der vorhergehenden Ansprüche,
wobei die integral als Klebeschicht (14) wirkende Koppelschicht (15) in zunächst flüssiger und/oder sprühfähiger Form insbesondere durch Sprühen oder im Roll-Coating-Verfahren an der Rückseite (R) des Verbundelements (12) angeordnet wird.

9. Verfahren nach einem der vorhergehenden Ansprüche,
wobei der mit der Matrix imprägnierte Verbundwerkstoff als einschichtiger oder mehrschichtiger Prepreg vorliegt und/oder
der mit der Matrix imprägnierte Verbundwerkstoff oder das Verbundelement (12) von der Sichtseite (S) zu der Rückseite (R) hin eine Materialstärke zwischen 0,2 und 1,5 mm, insbesondere zwischen 0,4 und 1,3 mm, aufweist.

10. Zierteil (10) für ein Fahrzeug
mit einem sichtseitigen Verbundelement (12) und einem dazu rückseitigen Trägerkörper (16) zur Anbindung des Zierteils (10) an das Fahrzeug sowie mit einer zwischen dem Verbundelement (12) und dem Trägerkörper (16) angeordneten flexiblen Koppelschicht (15),
wobei die Koppelschicht (15) aus einem Vliesstoff oder einem Schaumstoff oder einem beim Aufbringen flüssigen und/oder sprühfähigen Material gebildet sowie ausgebildet ist, das Verbundelement (12) mit dem Trägerkörper (16) zu verbinden,
wobei die Koppelschicht (15) mit dem Trägerkörper (16) hinterspritzt und formschlüssig und/oder stoffschlüssig mit dem Trägerkörper (16) verbunden ist,
wobei zwischen der Koppelschicht (15) und dem Verbundelement (12) eine Klebeschicht (14) angeordnet und die Koppelschicht (15) über die Klebeschicht (14) insbesondere unmittelbar mit dem Verbundelement (12) verbunden ist.
